# EUROPEAN PATENT APPLICATION

(11) **EP 3 241 617 A1**
(43) Date of publication of application: **08.11.2017**
(21) Application number: 16000989.0
(22) Date of filing: 02.05.2016
(51) Int. Cl.: B05D 3/06, B82Y 30/00, C23C 18/12

(54) **A METHOD FOR LIGHT-INDUCED ACTUATION OF PH-SENSITIVE ASSEMBLIES AND A COMPOSITE MATERIAL THEREFORE**

(71) Applicant: Max-Planck-Gesellschaft zur Förderung der Wissenschaften e.V., 80539 München (DE)
(72) Inventor: Skorb, Katsiaryna, 14476 Potsdam (DE); Andreeva-Bäumler, Daria, 91413 Neustadt a.d. Aisch (DE); Möhwald, Helmuth, 55411 Bingen (DE); Fratzl, Peter, 14195 Berlin (DE)
(74) Representative: v. Bezold & Partner Patentanwälte - PartG mbB

(57) **Abstract**

The invention relates to a method for light-induced actuation of pH-sensitive assemblies as well as to a composite material suitable therefore.

The claimed composite material comprises at least one photoactive inorganic material and at least one organic material and has at least one inorganic/organic interface, wherein the photoactive inorganic material is capable, after exposure to electromagnetic irradiation, to induce local pH changes, in particular a defined pH gradient, in the organic material and/or composite material which cause a change of a structural property of the organic material and/or the composite material.

The claimed method for light-induced actuation of pH-sensitive assemblies involves exposing said composite material to electromagnetic irradiation, in particular a focused or localized irradiation, causing local pH changes in the composite material which in turn cause a change of a structural property of the composite material or the organic material thereof.

The structural property to be changed may be any physical, in particular mechanical, topological or chemical property, of said composite material and/or organic material.

## Description

### Background

The use of external stimuli in order to modulate essential properties of polymer systems for various applications has been reported in the state of art.

For example, it is known to control the cell detachment behavior of polymeric cell culture substrates by adding a component, e.g. a reductant, which is capable to react with the substrate material and - due to said chemical reaction - change the surface properties of the substrate (US 2012/0309089 A1). Also known are cell culture substrates comprising thermosensitive polymers which are capable to change their cell attachment/detachment behavior in response to a change of temperature (EP 2 737 913 A1).

Further, pH-dependent or pH-sensitive polymers are a known class of materials with tremendous structural variety. Such polymers have been used, e.g., as the shells of "smart" nanoreservoirs of corrosion inhibitor which are capable to release said corrosion inhibitor in response to a change of pH induced by corrosion events (EP 1 832 629 B1).

Electromagnetic irradiation would be a very desirable external stimulus for modulating polymer systems due to its fast and convenient mode of action.

However, only a limited number of stimuli-responsive polymers are able to undergo light-initiated transitions. Well-known examples are polymers with azo-groups that undergo reversible isomerization upon irradiation. Unfortunately, the response on the molecular level is relatively weak, because azobenzene molecules change their geometry from planar to non-planar with a decrease in distance between the para carbon atoms only in the Angstrom range. Other known examples are photo-crosslinkable polymers, which are difficult to be used as stimuli-responsive ones, where changes should be totally reversible.

Thus, an object of the present invention is to provide new and effective means for modulating essential properties of polymer systems by electromagnetic irradiation, in particular for use in cell culture applications, sensor applications, and energy conversion/storage applications, which are broadly applicable and avoid or minimize the drawbacks of the prior art.

Said problem is solved according to the present invention by providing the composite material according to claim 1 and the method for light-induced actuation of pH-sensitive assemblies using said composite material according to claim 10. Other aspects and more specific embodiments of the present invention are the subject of further claims.

### Description of the invention

The composite material according to claim 1 comprises at least one photoactive inorganic material and at least one organic material and has at least one inorganic/organic interface, wherein the photoactive inorganic material is capable, after exposure to electromagnetic irradiation, to induce local pH changes, in particular a defined pH gradient, in the organic material and/or composite material which cause a change of at least one structural property of the organic material and/or the composite material.

The change of a structural property of the organic material and/or the composite material is not especially limited and may comprise any change of a physical, in particular mechanical, topological or chemical property.

Typically, one or more of characteristic properties such the thickness, roughness, stiffness, permeability, proton mobility, polymer mobility, scratch healing, adsorption/- desorption characteristics of the polymeric organic material or of the entire composite material will be changed.

The terms "photocatalytic" and "photoactive" materials are used interchangeable herein and mean the capability to respond to electromagnetic irradiation by producing a "photohole" and "photoelectron" and further to interact with the organic phase. Principally any such materials or "photocatalysts" may be used in the composite material present invention.

The choice of the material will depend, i.a., from the specific applications and desired properties of the respective composite material products and other factors which will be evident for the skilled person in the art.

Preferably, the photoactive inorganic material comprises or consists of a, optionally doped, semiconductor material or a material having a defect structure with an additional energy level in the band gap.

The light-response of semiconductors can be tailored by the composition and surface properties of the semiconductor. This provides materials which can induce a local change of pH (ΔpH) for reversible actuation of LbL assemblies without degradation by the generated reactive oxygen species (ROS).

More specifically, the photoactive inorganic material is selected from the group comprising TiO₂, ZnO₂, Zn(OH)₂, SnO₂, WO₃, In₂O₃, Fe₂O₃, CdO, CdS, PbS, SrTiO₃, BaTiO₃, Nd₂O₅, BaSnO₃, KTaO₃, MoS₂, MoSe₂, WS2, WSe₂, HfS₂, GaP, GaAs, Si, GdTe and other photocatalysts, and blends thereof.

The composite material also comprises an organic phase, wherein the organic material generally comprises or consists of a pH-sensitive polymer, or a polyelectrolyte, in particular a "weak" polyelectrolyte where the degree of their dissociation depends on the pH values and dissociation constant (pKa for polyacids or pKb for polybases), for example (poly(ethyleneimine), poly(allylamine) hydrochloride and weak polyacrylic acid, including biopolymers, such as polysaccharide-based polymers (e.g. chitin, cellulose based ones), where morphology and polarity strongly depend on pH.

The pH-sensitive polymers may also form or represent hydrogels which exhibit pronounced morphological changes in response to ΔpH and can also be used for multilayer formation. Such hydrogels may be, e.g., polysaccharide-based gels, in particular chitin- or cellulose-based hydrogels.

Here as well, the choice of the specific organic material will depend, i.a., from the specific applications and desired properties of the respective composite material products and other factors which will be evident for the skilled person in the art.

Typically, said organic material comprises one or more layers of a polymer or polyelectrolyte.

However, the organic material may also comprise or consist of particles, e.g. particles of poly(N-isopropylacrylamide-co-methacrylic acid) or of similar polymers/copolymers.

More specifically, the organic material or polymer is selected from the group comprising or consisting of poly(alkylene imine), e.g. poly(ethylene imine), poly(styrene sulfonate), poly(allyl amine), polyvinyl alcohol, poly(hydroxybutyric acid), polystyrene, poly(diallyldimethyl-ammonium chloride), poly(meth)acrylic acid, polyalkylene glcol, e.g. polyethylene glycol, poly(vinylpyridine), and biopolymers, in particular polysaccharide-based polymers, and polyamino acids, such as gelatin, chitosan, agarose, cellulose, alginic acid, dextran, casein, polyarginine, polyglycin, polyglutamic acid, polyaspartic acid, and derivatives, copolymers or blends thereof.

Other suitable polymers will be evident for the skilled artisan and may be obtained by, e.g., modifying the above polymers/polyelectrolytes or other polymers/polyelectrolytes as appropriate by introducing specific groups according to methods well known in the art. These groups may confer specific desirable properties to the polymer/polyelectrolyte, such as a defined hydrophilicity, hydrophobicity, charge, strength, sensibility for pH changes etc. The polymer or polyelectrolyte may also comprise copolymers or blends of suitable polymers/polyelectrolytes, such as copolymers or blends of the above mentioned polymers or polyelectrolytes.

A polymer or polyelectrolyte (multi)layer may be prepared by any suitable technique of the prior art, e.g. spin-coating, dip-coating, spray, microfluidics, including gel-forming techniques and layer-by-layer assembly of polyelectrolytes.

In one specific embodiment, the organic material comprises alternate layers of a positively charged polyelectrolyte, e.g. poly(ethylene imine), and of a negatively charged polyelectrolyte, e.g. poly (styrene sulfonate).

In another specific embodiment, the organic material comprises or consists of a pH-sensitive hydrogel, for example a polysaccharide-based hydrogel, in particular a chitosan- or cellulose-based hydrogel, preferably having carboxyl groups.

The inorganic material may be present as at least one film or layer contacting the organic material or may comprise or consist of particles which are embedded in the organic material and/or provided on a surface of the organic material.

In a preferred embodiment, the inorganic material comprises or consists of particles, typically with mean diameters in the range from 1 nm to 10 µm, more specifically from 2 nm to 100 nm.

The weight ratio of the inorganic material to the organic material may be in the range from 10⁻⁴ wt-% to 50 wt-%, more specifically from 10⁻⁴ wt-% to 1 wt-%.

In particular, in the case that the inorganic material is present in the form of particles embedded in the organic phase, the weight ratio may be in the range from 10⁻⁴ wt-% to 1 wt-%.

Depending on the specific application or use thereof, the composite material may comprise further components.

For example, the composite material may comprise biological cells, proteins, cell-adhesion or protein-adhesion modulating agents, recognition sequences, e.g. for proteins, peptides, nucleic acids, cells or microorganisms, or other functional entities, e.g. peptides, provided on a surface of the organic material.

Such additional components are in particular relevant and advantageous in cell culture applications.

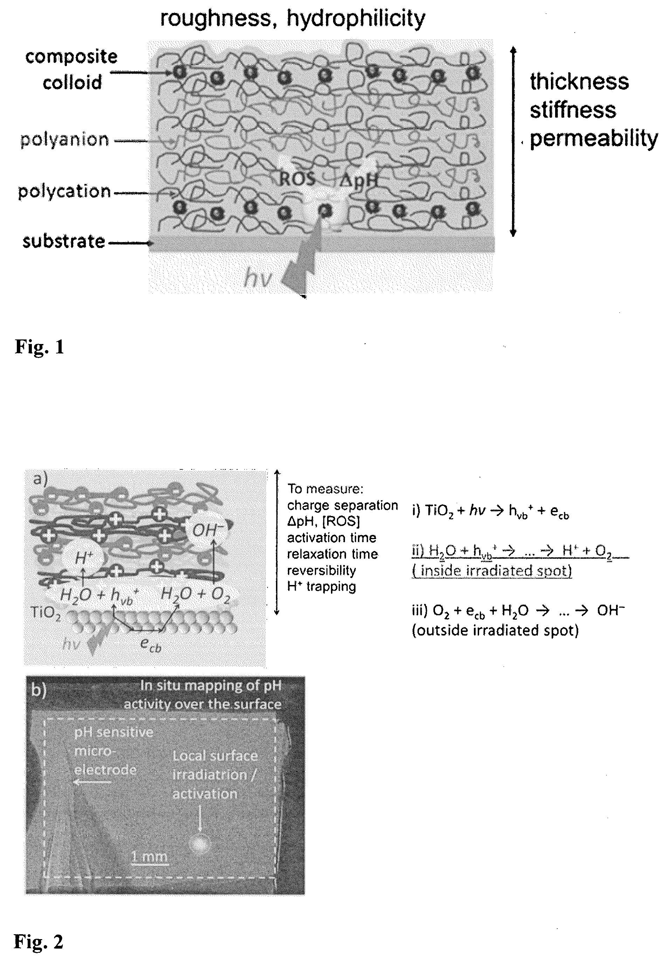

An exemplary composite material of the present invention is illustrated in Fig. 1.

Fig.1 shows schematically a photo-responsive composite film made of semiconductor particles (black) embedded in a polyelectrolyte film. Electromagnetic irradiation leads to the production of reactive oxygen species (ROS) and a local change of pH (ΔpH), which affects the composite film in terms of film thickness, roughness and local morphology. The semiconductor particles are depicted in black spheres to indicate their possible doping in order to activate a system not only with UV, but also with visible light.

A closely related second aspect of the present invention represent a method for light-induced actuation of pH-sensitive assemblies which comprises exposing a composite material as defined above to electromagnetic irradiation, in particular a refocused, analogously to diffuse sunlight, or localized irradiation, causing local pH changes in the composite material which in turn cause a change of a structural property of the composite material or the organic material as disclosed above.

The term "actuation" as used herein, means that a change of at least one structural property or physical parameter of the composite material or the organic material as disclosed above takes place in response to an external stimulus, i.e. in the present case, electromagnetic irradiation as the primary stimulus and a local change of pH as the secondary stimulus. In a preferred embodiment this actuation is reversible.

Thus, an important aspect of the present invention is the possibility of efficient transformation of energy of electromagnetic irradiation into local pH gradients to actuate soft (organic) matter.

Typically, the kind of irradiation is selected from UV, visible or IR irradiation and preferably the electromagnetic irradiation involves a laser irradiation. Generally, the wavelength for UV irradiation is in a range of from 200 nm to 400 nm, the wavelength for visible light irradiation in a range from 400 nm to 800 nm and the IR wavelength in a range from 800 nm to 3500 nm.

Suitable photoactive materials for each part of the spectrum can be selected by the skilled artisan, in particular from the above indicated materials, without undue burden.

The actuation can be regulated or adjusted by the dose and intensity of irradiation. For this purpose, the intensity of irradiation may vary over a broad range, i.a. depending on the specific composite materials and wavelength of the electromagnetic radiation used.

Typically, the electromagnetic irradiation is effected for a time period in the range from 1 ms to 20 h, preferably from 1 ms to 1 h, more preferred from 1 s or 1 min. to 30 min, and an irradiation dose in the range from 1 mW/cm² to 20 W/cm², preferably from 10 mW/cm² to 20 W/cm². Preferably, the wavelength of irradiation is in the range from 190 nm to 490 nm.

However, in some specific cases other time periods or irradiation doses may be more appropriate.

According to the present invention, the area of the actuation can be advantageously determined by the irradiation focus.

Thus, a local actuation or change of structural properties in some predetermined area of a composite substrate can be effected, whereas in other areas the composite substrate is not effected or the subject of a different actuation.

Such embodiments have great potential in biosciences, medicine, tissue engineering etc. due to the possibility of localized irradiation of micron-sized areas with fast on/off switching rates.

Another important aspect of the present invention resides in the fact that in the method for light-induced actuation of pH-sensitive assemblies as disclosed above, it is possible to control an effective separation of photogenerated H⁺ ions and OH- ions over a dimension or surface of the composite material, in particular to generate a predetermined pH-gradient, and/or to control the spatially resolved diffusion length of the photoprotons in LbL multilayers of the organic material in horizontal and vertical directions.

The favorable properties and effects as outlined above enable various innovative uses of the claimed composite material in various energy conversion and/or storage applications as well as in other fields.

Consequently, further aspects of the present invention relate to the use of the claimed composite material or method for, e.g., toxicity tests of the inorganic photoactive material, cell culture applications, anti-fouling applications, cosmetic and/or sunscreen formulations, sensor applications or energy conversion/storage applications etc.

Further closely related aspects are cell culture substrates, sensors or analytical/diagnostic devices, in particular biosensors, or energy conversion/storage devices comprising the composite material as disclosed above.

In particular, a cell culture substrate according to the invention may comprise or be based on a composite material which comprises biological cells, proteins, cell-adhesion or protein-adhesion modulating agents, recognition sequences or other functional entities, e.g. peptides, provided on a surface of the organic material.

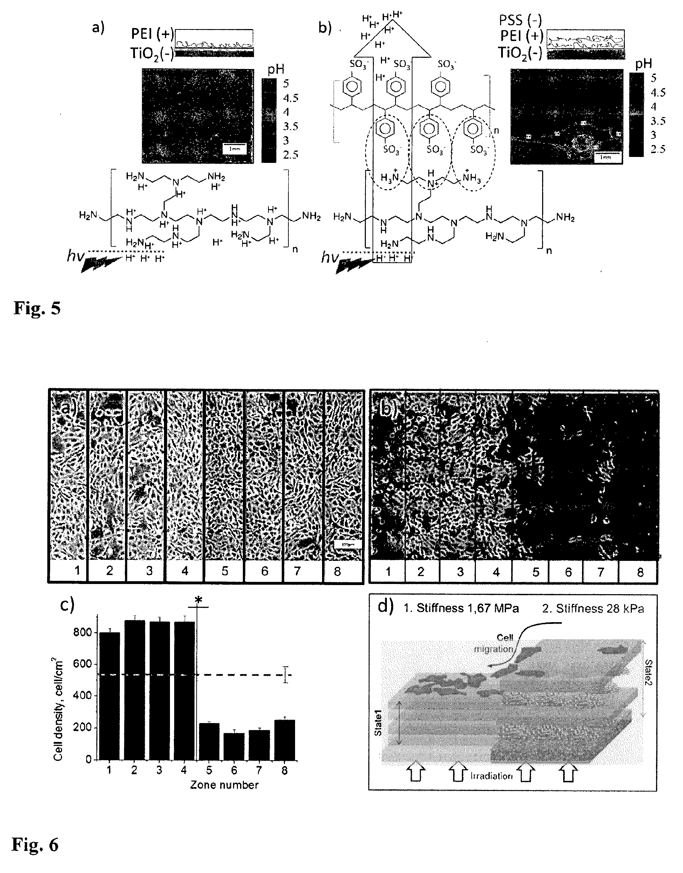

One specific embodiment of the invention relates to the use of a photo- and pH-sensitive system and composite material as disclosed above for the regulation of cell dynamics. This application is described in more detail in Example 2 and Fig. 6 below.

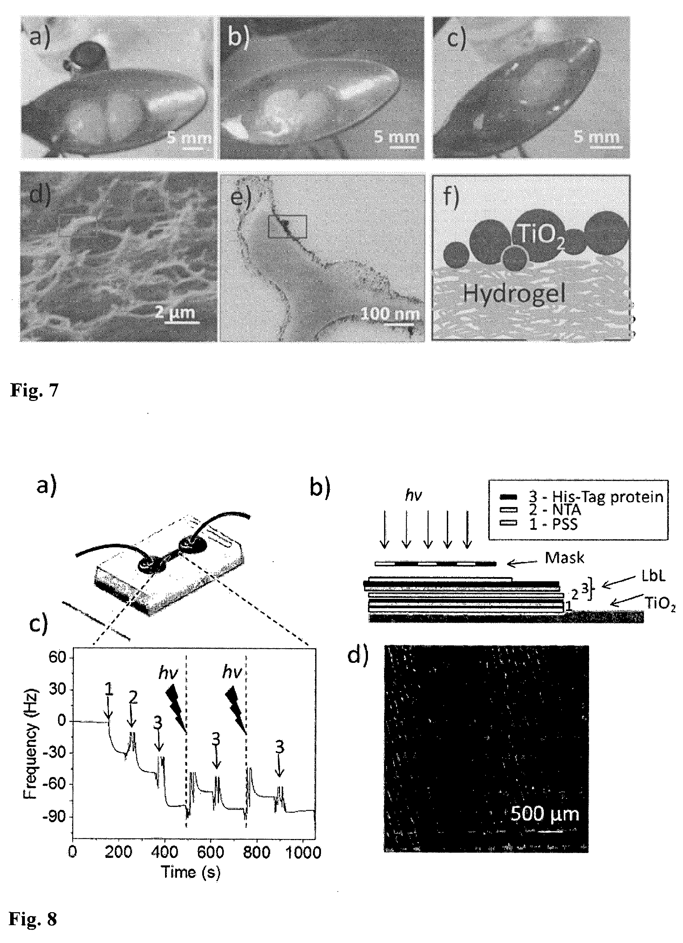

Another specific embodiment of the invention relates to the light-induced healing or curing of hydrogels, in particular polysaccharid-based hydrogels, which comprise a photoactive component, e.g. particles of titania (TiO₂) or of another photoactive inorganic material. This application is described in more detail in Example 3 and Fig. 7 below.

A further specific embodiment of the invention relates to the application of a photo- and pH-sensitive system and composite material as disclosed above for toxicity tests of photosensitive inorganics, e.g. oxides, which are intended to be used in, e.g., cosmetic formulations.

This approach may be illustrated with sunscreens containing nanosized TiO₂ particles as one component. It has been argued that the marketing of this TiO₂ nanomaterial in UV protective cosmetics is ethically undesirable, since it violates four reasonable conditions for societal experimentation: absence of easy alternatives, controllability, limited informed consent, and continuing evaluation. To remedy the current way nanosized TiO₂ containing sunscreens are utilised, there are complementing actions suggested: closing the gap, setup monitoring tools, continuing review, designing for safety, and regulative improvements so that its marketing can become more acceptable.

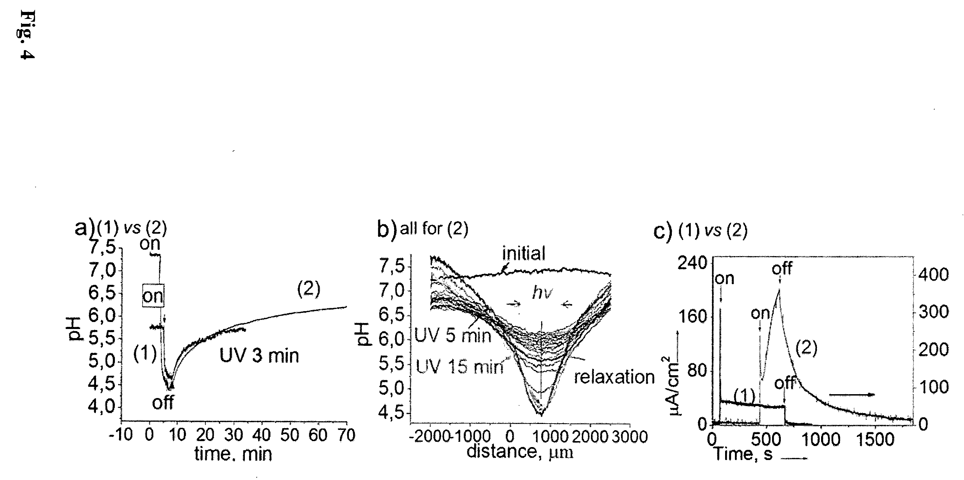

The present invention allows to test titania interfaces in the presence of other organic parts of creams and to answer questions how to decrease the negative action of titania particles with maintaining its activity of UV-light protection. For example, it is possible to cover titania with PEI (see also Fig. 4a) to adsorb light, but stop propagation of toxic species from the titania surface.

Thus, the present invention enables to provide optimized compositions with none or low toxicity of a photoactive material, suitable for cosmetic formulations.

A still further specific embodiment of the invention relates to the use of a photo- and pH-sensitive system and composite material as disclosed above in sensor applications, in particular biosensors. This application is illustrated in Example 4 and Fig. 8 below.

Immobilized proteins show much promise as the basis for fabrication of different biosensors with electrochemical, optical and capacitive read-outs. To integrate the protein recognition elements into lab-on-chip devices one needs to exert a remote control over adsorption and desorption of proteins as well as over their biochemistry. Especially, immobilization of proteins containing short affinity His-Tag out of residues plays an important role in current research.

These proteins are an indicator for many diseases, including liver cirrhosis, AIDS, and renal disease. The most common and widely employed method for protein analysis is chromatography, which utilizes different separation techniques.

His-Tag sequences, notably specific amino acid side chains, have a strong affinity to transition metals, for example Ni. Given that, transition metals coordinated by a NTA-chelate complex offer a possibility for reversible binding of biopolymers. To reverse protein adsorption, the surface is washed by imidazole solution, which coordinates to the metal and leads to protein release. There are several methods for NTA deposition on a surface, such as coordination to a gold surface by thiol groups, and covalent bonding by silane coupling agents and polymers. However, the NTA His-Tag itself is a pH sensitive complex and it is possible to organize it with, e.g., a LbL assembly to increase the protein surface concentration in comparison with salinization. Also, the mobility of surface organized pH-sensitive NTA His-Tags may be then controlled with light.

The present state of the art with respect to the chemical and physical modification of surfaces indicates a significant need for the construction of more efficient devices with supramolecular architecture. Multifunctional interfaces are in great demand, since they provide a material with new functions and stimuli responsive behavior. Ultrathin multicomponent films have been advantageously used in the development of sensors sensitive to chemical changes (pH, ionic strength), biosensors and molecular actuators, but light-sensitive materials still have intrinsic limitations in light initiated transitions.

The present concept of a new generation of light-responsive molecular actuators is based on an energy conversion system that *in situ* transfers electromagnetic energy into a local pH shift affecting a dynamic recognition element for protein detection and manipulation.

Several advantages of the present strategy as exemplified by the system of Example 4 over molecular His-Tag protein recognition and manipulation systems of the art are evident:
i) The photostimulated reactions on the semiconductor layer (here TiO₂) lead to an energy conversion that *in situ* transforms electromagnetic energy into a local pH shift enabling manipulation of dynamic recognition element protein binding;
ii) The *in situ* electromagnetic - chemical energy conversion system based on doped titania is adjustable for a broad range of electromagnetic irradiation as well as its localization;
iii) The LbL assembly provides nanoscale control over spatial distribution, thickness and orientation of recognition molecules, possible immobilizing of highly sensitive biomolecules without inhibiting their activity and long-term mechanical and chemical stability of the recognition system.
iv) The mono-NTA (*1*xNTA) surface is the traditional approach for capturing His-Tag proteins but it achieves weak binding, the LbL assembly surface improves binding stability and increases the binding selectivity to proteins providing n multiplication of recognition (nxNTA) element for highly precise recognition.

### Brief Description of the Figures

Fig. 1 schematically depicts a photo-responsive composite film made of semiconductor particles (black) embedded in a polyelectrolyte film.
Fig. 2 shows a polymer-decorated TiO₂ surface and occurring photo-initiated light-pH coupled reactions.
Fig. 3 shows the conversion of electromagnetic irradiation into local pH gradients: SIET proton maps 1) on a pristine TiO₂ surface, and 2) on a LbL-decorated TiO₂ surface.
Fig. 4 shows the temporal evolution of the pH (SIET measurements) on a pristine TiO₂ surface and on a LbL-decorated TiO₂ surface.
Fig. 5 shows the efficiency of PEI as proton sponge to store photogenerated protons on TiO₂.
Fig. 6 shows the cell 4D regulation on the surface of multilayer coatings on glass consisting of LbL BCM/PAA two bilayer coatings either without (zone 1-4) or with (zone 5-8) a photoactive TiO₂ film underneath.
Fig. 7 shows the light curing of cellulose/titania based hydrogels.
Fig. 8 schematically illustrates the formation of light-sensitive multilayers which combine a light-responsive semiconductor layer with strong polyelectrolyte layers and pH-responsive dynamic detector layers for His-Tag protein recognition and manipulation.

The following examples are given to illustrate the present invention in more detail, however, without limiting the same to the specific parameters and conditions thereof.

### EXAMPLE 1

### Preparation and characterization of pH-sensitive LbL assemblies on photoactive TiO₂ surfaces

In a first study, a pH-sensitive LbL assembly on photoactive TiO₂ surfaces was characterized.

The system was prepared as follows. A thin film of TiO₂ was deposited on various substrates by traditional methods, e.g. sol-gel formation, atomic layer deposition or titanium surface sonochemical or electrochemical treatment. pH-sensitive layers of 'weak' polyelectrolytes can be formed on top of titania layer through, e.g., samples dip-coating in polyelectrolyte solutions of a concentration from 1 mg/ml to 5 mg/ml in NaCl of 0.1 M to 1 M, depending on the designed conformation.

The light-sensitive part is a photo-catalytically active nanostructured TiO₂ film. It is known that under supra-bandgap illumination a photohole and a photoelectron are formed on the surface of titania. The formed active species can then take part in a series of different photocatalytic reactions. Thus, the photoholes can convert the surface hydroxyl groups into protons, the photogenerated electrons can be scavenged by any scavenging agent, in most cases by oxygen. During photocatalytic reactions both H⁺ and OH⁻ are generated on different sites of titania. If titania is coated by a pH sensitive polymer, the generated local ΔpH will modulate the polymer layer.

Fig. 2 shows the surface decoration and photoinitiated light-pH coupled reactions. Fig. 2a) Primary and secondary photocatalytic reactions on TiO₂ resulting in a local change of pH (ΔpH). The reactions shown are (i) light-stimulated charge separation, (ii) primary reaction with photoholes with final production of protons and local surface acidification in the irradiated area, and (iii) photoelectron reaction. ΔpH will affect the dynamic layers assembled on titania in terms of local changes in film thickness, stiffness and permeability by regulating the time of dynamic layer activation, relaxation and reversibility. (b) top-view of the surface during preceding local pH (ion-selective microelectrode technique (SIET) probe) activity on a semiconductor with and without LbL polyelectrolyte assembly studied during local irradiation.

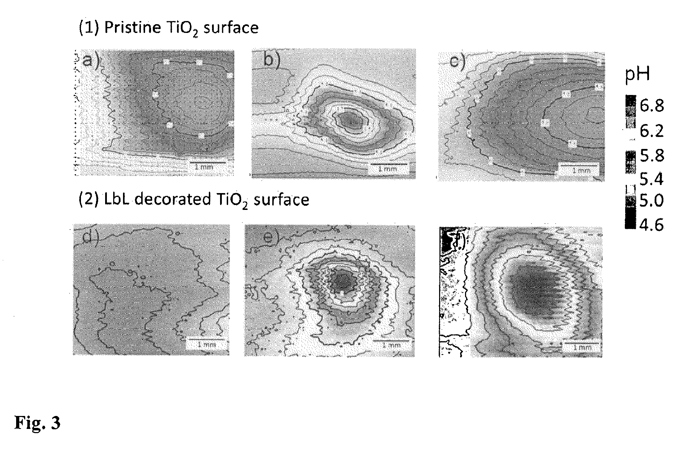

For pH-sensitive modulation with light, it is important to understand how photoinitiated processes on TiO₂ result in the transformation of light into a pH change, including localization of the effect. The *in situ* ion-selective microelectrode technique (SIET) was applied for mapping of the activity and migration of H⁺ ions over TiO₂ with a LbL assembly of a weak positively charged polyelectrolyte (PEI, polyethylenimine), and a strong negatively charged one (PSS, polystyrene sulfonate): TiO₂/(PEI/PSS)₂. Maps of pH are collected on (1) pristine TiO₂ *vs.* (2) TiO₂/(PEI/PSS)₂ and shown in Fig. 3 before irradiation (Fig. 3a *vs.* 3d); during UV irradiation (appr. 5 mW/cm²) (Fig. 3b *vs.* 3e); and after switching off the irradiation, after 40 min relaxation (Fig. 3c *vs.* 3f). It is evident from the presented proton distribution maps that under irradiation, indeed as suggested in Fig. 2, in the center preferably the reaction of the generation of protons is seen (Fig. 3b), the OH⁻ are also observed in the areas around the irradiation spot. The drastically different character of the pH relaxation on (1) TiO₂ *vs.* (2) TiO₂/(PEI/PSS)₂ is clearly seen, which proves the concept of the present invention.

The polyelectrolytes apparently have a strong influence on charge carrier transformation into H⁺ and are able to act as a proton storage material under these conditions.

The action of different photoelectrochemical reactions (Fig. 2a) on the TiO₂ surface under UV illumination seems to be the only plausible explanation for the observed local acidification for more than 20 hours for the initial state (Fig. 4a). The focused line scan (Fig. 4b) visibly proves the effect of LbL for spatial charge separation in the LbL assembly. Thus, in the center of the irradiation spot the pH decreases, and outside the irradiated spot the pH increases. These data provide clear evidence that the conversion of energy of electromagnetic irradiation into pH gradients is possible and also a spatial regulation by localization of the irradiation spot.

Fig.3 demonstrates the conversion of energy of applied electromagnetic irradiation into pH gradients: *in situ* local pH activity on titania, SIET proton maps of (1) pristine TiO₂ vs. (2) TiO₂/(PEI/PSS)₂ (a,d) before, (b,e) during the local exposure, and (c, f) pH relaxation after 40 min of switching off the local irradiation. PEI is deposited from 2 mg/ml, pH=9, M(_{NaCl)}=0.5M; PSS - 2 mg/ml, pH=6, M_{(NaCl)}=0.5M.

For assessing the practical applicability of this process, it is relevant to know how many protons and photons are needed from the surface to locally change the pH from 7 to, for example, 4.

To calculate the concentration of needed protons for activation, it is assumed for 1 cm² of TiO₂ to achieve a pH = 4 or [H⁺] = 10⁻⁴ M or 6x10¹⁹/L a coating with thickness of e.g. 500 nm, that is V = 5 10⁻⁸ L. The concentration of protons in the system is then [H⁺] =3x 10¹² protons/cm², which is about 0.3 % of the lattice sites of a typical solid (10¹⁵ lattice sites/cm²). This means that only 0.3 % of the surface atoms have to be charged to achieve pH = 4, if no losses exist.

Even if one considers a low radiation intensity of 1 mW/cm² = 10¹⁶ photons/cm²sec for a quantum yield proton/photon conversion of 0.1 % the photons from 300 ms irradiation would create enough protons on the TiO₂ surface to achieve LbL switching on the surface of TiO₂ with relatively low photoactivity without LbL degradation.

Also interesting is the correlation between SIET and SVET signals. All preliminary results discussed above are for TiO₂/(PEI/PSS)₂ which is a very thin layer of LbL assembly, about 8 nm thickness (measured by ellipsometry for (PEI/PSS)₂ assembled on a silicon wafer). It is of interest to know how the discussed effects correlate with film thickness. For a thin film no significant change in the SVET signal character is detected for TiO₂ *vs.* TiO₂/(PEI/PSS)₂.

To test the hypothesis that there should be a difference between thin and thick layer response, an LbL assembly of pH sensitive block copolymer micelles (BCM) and poly(acrylic acid) (PAA) on TiO₂, which assemble in thick layers, was prepared and investigated. The thickness of the initially assembled layer is 150 nm. Then the illumination is switched on, and changes in thickness are monitored with AFM. A maximum thickness (750 nm) is achieved within 10 min. The used power (appr. 5 mW/cm²) and duration (less than 20 min) of irradiation does not lead to degradation of the LbL assembled coating, which is verified in control experiments.

Fig.4: a, b) The SIET temporal evolution of the pH in (a) the center of the irradiation spot over (1) pristine TiO₂ *vs.* (2) TiO₂/(PEI/PSS)₂ and (b) line scan over TiO₂/(PEI/PSS)₂ surface under local UV illumination (hv points to the location of the irradiation spot).(c) The SVET single point monitoring of the kinetics of photoionic current over the surface under local UV illumination of a highly photoactive TiO₂ film in the center of irradiated spot (1) without and (2) with (BCM/PAA)₂ LbL assembly. NOTE! different scale bars for surface with and without LbL assembled film on TiO₂ and drastic increase of efficiency in the steady mode (ca. 40 µA/cm² for uncoated TiO₂ and more than 350 µA/cm² for weak polyelectrolyte coated TiO₂). On is the moment the illumination is switched on, off - illumination is switched off.

The SVET signal for a thick layer (Fig. 4c) on (1) pristine TiO₂ *vs.* (2) TiO₂/(BMC/PAA)₂ is drastically different. An abrupt increase in the ionic current over the TiO₂/(BMC/PAA)₂ surface can be explained by several reasons: (i) extending the ion migration processes in the local irradiated area; (ii) increasing the lifetime of H⁺ and OH⁻.

The proton mobility in polyelectrolyte multilayers has been discussed in the literature, but no quantitative data with respect to specific ion diffusion coefficients are presently available.

For the purpose of preliminary estimation, a reasonable number of D = 10⁻⁵ cm²/sec is assumed, which is a value for proton diffusion in water. However, this value may be even underestimated for polyelectrolytes.

With this figure, it is possible to calculate which time t is required to distribute a charge that is released at the interface into the entire film of, for example, 500 nm thickness? With the Einstein relation, a value of t = (500 nm)²/ 2x10⁻⁵ cm²/sec = 2.5x10⁻⁴ sec is obtained. Hence diffusion is not limiting the process, but rather the swelling kinetics. This estimate also indicates that even charges with msec lifetimes would be effective for light actuation of pH-sensitive polymer layers on TiO₂.

Also important is the termination of proton trapping for long terms. It is known that, for example polymers as PEI have a high proton sponge ability. Indeed, it is evident from Fig. 5a, that the PEI deposited on titania accumulates all protons inside, no H⁺ activity is detected by SIET, so that the solution activity (pH ∼ 5) remains the same under irradiation. Hence no activity is observed in the irradiation spot due to trapping of all photogenerated protons inside the PEI sponge.

As with PEI, proton sponge activity can be expected from chitosan and similar materials as well. In SIET experiments not presented here it is confirmed that, indeed, the chitosan system also has proton sponge ability.

Thus, different LbL compositions and architecture can be used to modulate the proton release. PEI itself being deposited from different solutions, of different NaCl concentration and pH, has different number of protonated groups and different sponge activity. Moreover termination of surface sponge groups of PEI by charged groups of oppositely charged polyelectrolytes, shown in Fig. 5b by PSS, results in increase of H⁺ release in the center of the irradiation spot due to higher affinity to charged PSS groups in the case of PEI.

All *in situ* SIET results above prove that a LbL assembly on titania is effective to modulate or even prevent H⁺ activity over the surface.

Fig.5 further demonstrates the efficiency of PEI as proton sponge to store photogenerated protons on titania. a) SIET detects no proton activity over the surface during irradiation: SIET map during irradiation and schematics. b) Additional PSS deposition results in visible release in the place of irradiation of protons, probably, due to terminating PEI sponge groups with oppositely charged groups of PSS decreasing PEI sponge activity: SIET map under irradiation and schematic of some interfacial processes. PEI is deposited from 2 mg/ml, pH=6, M_{(NaCl)}=1M; PSS - 2 mg/ml, pH=6, M_{(NaCl)}=1M.

### EXAMPLE 2

### 4D regulation of cell growth and migration on substrate surfaces

A multilayer coating designed for cell experiments was formed on glass and consisted of LbL BCM/PAA two bilayer coatings either without (zone 1-4) or with (zone 5-8) a photoactive TiO₂ film underneath (Fig. 6). Thus the border, where the changes are expected are between the zones 4 and 5. MC3T3-E1 preosteoblasten were cultivated on this substrate.

Fig. 6a shows the cell distribution over the surface after 5 days of culturing; Figs. 6b-c show cell reorganization (b) image and (c) cell density zone relevant calculation after 10 s of UV-irradiation of the surface. In the experiment the cells were culturing for 5 days, after that a short pulse of irradiation was applied from back to cell growth side, image detected the cell distribution over the surface in 30 min after irradiation pulse. Note that the irradiation was performed from the bottom side as shown in Fig 6d, schematic, cells migrate to the "harder" surface side in 30 min time scale. Thus, the cells themselves were not exposed to the UV-irradiation. Cells migrate to the "harder" surface side. Stiffness was measured with colloidal probe atomic force microscopy (CP AFM) and calculated with the Hertz model before and after surface film activation with light. The error bars indicate standard deviations from mean values of three biological replicates (n = 3). Asterisks indicate statistical significance *p < 0.05.

### EXAMPLE 3

### Light-induced curing of cellulose/titania based hydrogels

Titania particles can be added to a pH-sensitive cellulose-based hydrogel or *in situ* synthesized in a hydrogel matrix through hydrolysis reaction of alkoxy-derivatives of titania (TiO₂). Particles contacting cellulose fibers enable their manipulation with light due to local pH change on titania surface. On macroscopic level such hybrid materials will have advantageous characteristics such as the possibility of light-stimulated healing or curing of hydrogels, in particular suitable for cell growth. Such hydrogels may be for example hydrogel blocks from 3D organ printing.

Fig. 7 shows: Optical images of a) composite hydrogel cut; 7b,c) light healing of the material (b) at the initial moment of irradiation, (c) after 15 min of irradiation. d) SEM image of hydrogel fibers, e) TEM image of the fiber showing the contact of charged fiber polymer material with TiO₂ particles covering the fiber, with (f) schematic of fiber / titania interface.

### EXAMPLE 4

### Light-sensitive biosensors for protein recognition and manipulation

In this embodiment, light-sensitive molecular actuators consisting of dynamic inorganic/organic multilayers are prepared and used. The multilayers are deposited using a versatile Layer-by-Layer (LbL) approach. The inorganic component of the multilayers is formed by titania and doped titania layers that are able to transfer energy of electromagnetic irradiation into local pH shifts via a photocatalytic reaction.

PH-insensitive strong polyelectrolytes (PEs) are deposited in order to implement the stability of LbL assembly. Nickel-nitrilotriacetic acid (Ni-NTA) complexes are deposited between the PE layers and provide the system with recognition functions for (poly)histidine-tagged (His-Tag) protein capture. Spatially resolved adsorption/desorption of proteins by this system is regulated by light triggered local pH shift. This is schematically illustrated in Fig. 8.

Fig. 8: a,b) Schematic illustration of formation of light-sensitive multilayers which combine a light-responsive semiconductor layer with strong polyelectrolyte layers and pH-responsive dynamic detector layers for His-Tag protein recognition and manipulation. b) Illustration of His-Tag protein adsorption/desorption during irradiation. c) QCM frequency change during the adsorption of (1) PSS, (2) NTA, (3) His-Tag protein; hv corresponds to the moment of irradiation and results in protein desorption. Cycles of adsorption, light induced desorption are repeated several times. (d) irradiated areas by local irradiation through a photomask.

## Claims

1. A composite material comprising at least one photoactive inorganic material and at least one organic material and having at least one inorganic/organic interface,
wherein the photoactive inorganic material is capable, after exposure to electromagnetic irradiation, to induce local pH changes, in particular a defined pH gradient, in the organic material and/or composite material which cause a change of a structural property of the organic material and/or the composite material.

2. The composite material according to claim 1, wherein the change of a structural property of the organic material and/or the composite material comprises a change of a physical, in particular mechanical, topological or chemical property, such as the thickness, roughness, stiffness, permeability, proton mobility, polymer mobility, scratch healing, adsorption/desorption characteristics of the organic material or composite material etc.

3. The composite material according to claim 1 or 2, wherein the photoactive inorganic material comprises or consists of a, optionally doped, semiconductor material or a material having a defect structure with an additional energy level in the band gap.

4. The composite material according to any one of claims 1 to 3, wherein the photoactive inorganic material is selected from the group comprising TiO₂, ZnO₂, Zn(OH)₂, Sn02, Wo₃, In₂O₃, Fe₂O₃, CdO, CdS, PbS, SrTiO₃, BaTiO₃, Nd₂O₅, BaSnO₃, KTaO₃, MoS₂, MoSe₂, WS2, WSe₂, HfS₂, GaP, GaAs, Si, GdTe and other photocatalysts, and blends thereof.

5. The composite material according to any one of claims 1 to 4, wherein the organic material comprises or consists of a pH-sensitive polymer, including a pH-sensitive hydrogel, or a polyelectrolyte.

6. The composite material according to claim 5, wherein the the organic material comprises one or more layers of a polymer or polyelectrolyte selected from the group consisting of poly(alkylene imine), e.g. poly(ethylene imine), poly(styrene sulfonate), poly(allyl amine), polyvinyl alcohol, poly(hydroxybutyric acid), polystyrene, poly(diallyldimethylammonium chloride), poly(meth)acrylic acid, polyalkylene glcol, e.g. polyethylene glycol, poly(vinylpyridine), and biopolymers, in particular polysaccharid-based polymers, and polyamino acids, such as gelatin, chitosan, agarose, cellulose, alginic acid, dextran, casein, polyarginine, polyglycin, polyglutamic acid, polyaspartic acid, and derivatives, copolymers or blends thereof.

7. The composite material according to claim 5 or 6, wherein the organic material comprises alternate layers of a positively charged polyelectrolyte, e.g. poly(ethylene imine), and of a negatively charged polyelectrolyte, e.g. poly (styrene sulfonate).

8. The composite material according any one of claims 1 to 7, wherein the inorganic material is present as at least one film or layer contacting the organic material or comprises or consists of particles which are embedded in the organic material and/or provided on a surface of the organic material.

9. The composite material according to any one of claims 1 to 8, which further comprises biological cells, proteins, cell-adhesion or protein-adhesion modulating agents, recognition sequences, e.g. for proteins, peptides, nucleic acids, cells or microorganisms, or other functional entities, e.g. peptides, provided on a surface of the organic material.

10. A method for light-induced actuation of pH-sensitive assemblies comprising exposing a composite material according to any one of claims 1 to 9 to electromagnetic irradiation, in particular a refocused or localized irradiation, causing local pH changes in the composite material which in turn cause a change of a structural property of the composite material or the organic material thereof.

11. The method according to claim 10, wherein the light-induced actuation comprises a change of a physical, in particular mechanical, topological or chemical property, such as the thickness, roughness, stiffness, permeability, proton mobility, polymer mobility, scratch healing, adsorption/desorption characteristics of the organic material or composite material etc.

12. The method according to claim 10 or 11, wherein the area of the actuation is determined by the irradiation focus and/or wherein the actuation is regulated by the dose and intensity of irradiation.

13. The method according to any one of claims 10 to 12, wherein an effective separation of photogenerated H⁺ ions and OH⁻ ions over a dimension or surface of the composite material is controlled, in particular wherein a predetermined pH-gradient is generated, and/or wherein the spatially resolved diffusion length of the photoprotons in LbL multilayers of the organic material in horizontal and vertical directions is controlled.

14. The method according to any one of claims 10 to 13, wherein the electromagnetic irradiation is effected for a time period in the range from 1 ms to 20 h, preferably from 1 ms to 1 h, and an irradiation dose in the range from 1 mW/cm² to 20 W/cm², preferably from 10 mW/cm² to 20 W/cm².

15. The composite material according to any one of claims 1 to 9 or the method according to any one of claims 10 to 14, wherein the electromagnetic irradiation is selected from the group of UV, visible light and IR irradiation.

16. A cell culture substrate, sensor or analytical/ diagnostic device, in particular biosensor, or energy conversion/storage device comprising the composite material according to any one of claims 1 to 9.

17. Use of the composite material or the method according to any one of claims 1 to 16 for toxicity tests of the inorganic photoactive material, cell culture applications, anti-fouling applications, sensor applications or energy conversion/storage applications.
